Europäisches Patentamt

European Patent Office

Office européen des brevets

(11) Veröffentlichungsnummer: **0 591 628 A1**

## EUROPÄISCHE PATENTANMELDUNG

(21) Anmeldenummer: **93110990.4**

(22) Anmeldetag: **09.07.93**

(51) Int. Cl.$^5$: **G05D 23/19**

(30) Priorität: **05.10.92 CH 3099/92**

(43) Veröffentlichungstag der Anmeldung:
**13.04.94 Patentblatt 94/15**

(84) Benannte Vertragsstaaten:
**AT BE CH DE DK FR LI NL**

(71) Anmelder: **Landis & Gyr Business Support AG**

**CH-6301 Zug(CH)**

(72) Erfinder: **Affolter, Erhard**
**Scheine**
**CH-4937 Ursenbach(CH)**

(54) **Verfahren zur Veränderung von Programmparametern eines Heizkreisreglers und Einrichtung zur Durchführung des Verfahrens.**

(57) In einem Verfahren zur Veränderung von Programmparametern eines Heizkreisreglers, welcher eine Anzahl n mittels eines Bedienungselementes wählbare Betriebsarten (8.1 bis 8.n) aufweist, wird jede gewünschte Veränderung als eine auszuführende Aktion (9.1 bis 9.n) genau je einer der Betriebsarten (8.1 bis 8.n) zugeordnet. Für eine Veränderung wird das Bedienungselement betätigt ($e_T$), bis diejenige Betriebsart (8.1 bis 8.n) ausgewählt ist, welcher die Veränderung zugeordnet ist. Indem ein weiteres Bedienungselement betätigt ($e_P$) wird, wird die der ausgewählten Betriebsart (8.1 bis 8.n) zugehörige Aktion (9.1 bis 9.n) ausgeführt, was die gewünschte Veränderung bewirkt. Für die Einrichtung zur Durchführung des Verfahrens muss der mechanische Aufbau des Heizkreisreglers nur geringfügig erweitert werden. Ein bestehendes Bedienungskonzept für den Benutzer des Heizkreisreglers bleibt grundsätzlich erhalten; es wird lediglich ergänzt.

Fig. 4

Die Erfindung bezieht sich auf ein Verfahren zur Veränderung von Programmparametern eines Heizkreisreglers sowie auf eine Einrichtung zur Durchführung des Verfahrens gemäss den Oberbegriffen der Ansprüche 1 und 4.

Solche Verfahren eignen sich beispielsweise zur Eingabe und/oder Veränderung von Schaltzeiten eines Heizprogramms eines Heizkreisreglers.

Es ist ein Verfahren dieser Art bekannt (EP 0 444 308 A2), bei dem ein Betreiber einer Anlage während eines Tagesverlaufes zu den von ihm festgelegten Zeitpunkten die von ihm gewünschten Temperaturwerte an einem Einstellgerät eingibt.

Es ist auch bekannt (DE GM 89 15 589.0), den Zeitpunkt einer Betätigung einer Taste zur Herbeiführung einer selbsttätig alle 24 Stunden wiederholbaren Absenkung vorbestimmter Dauer zu verwenden.

Der Erfindung liegt die Aufgabe zugrunde, ein Verfahren zur einzelnen Veränderung von insgesamt mindestens zwei Programmparametern eines Heizkreisreglers anzugeben und eine Einrichtung zu schaffen, mit der das Verfahren durchführbar ist.

Die genannte Aufgabe wird erfindungsgemäss durch die Merkmale der Ansprüche 1 und 4 gelöst. Vorteilhafte Ausgestaltungen ergeben sich aus den abhängigen Ansprüchen.

Nachfolgend werden Ausführungsbeispiele der Erfindung anhand der Zeichnung näher erläutert. Es zeigen:

Fig. 1   einen Teil eines Heizkreisreglers mit Bedienungselementen und Anzeigeeinheiten,

Fig. 2   ein Bedienungselement und eine Anzeigeeinheit eines Heizkreisreglers,

Fig. 3   ein weiteres Bedienungselement und

Fig. 4   ein Zustands-Ereignis-Diagramm zu einem Verfahren zur Veränderung von Programmparametern des Heizkreisreglers.

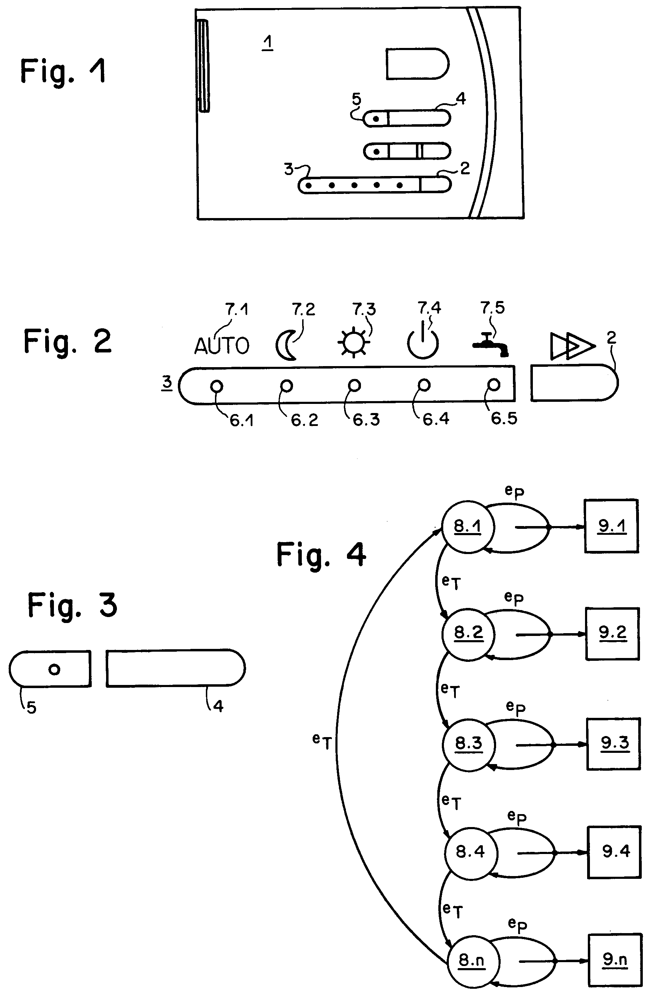

In der Fig. 1 bedeutet 1 einen Gehäuseteil eines Heizkreisreglers einer Heizungsanlage. Am Gehäuseteil 1 sind mindestens ein Bedienungselement 2 zur Wahl einer Betriebsart des Heizkreisreglers, eine Anzeigeeinheit 3 und ein weiteres Bedienungselement 4 angeordnet. Bei Bedarf weist der Gehäuseteil eine weitere Anzeigeeinheit 5 auf.

Die Fig. 2 zeigt eine vorteilhafte Ausführung des Bedienungselements 2 und der Anzeigeeinheit 3. Das Bedienungselement 2 ist mit Vorteil eine Drucktaste, durch deren Betätigung die Betriebsart des Heizkreisreglers in einer vorbestimmten Reihenfolge endlos weiterschaltbar und dadurch wählbar ist.

Die Anzeigeeinheit 3 weist mit Vorteil für jede Betriebsart je ein optisches Element 6.1 bis 6.5 auf, welches neben einem die Betriebsart darstellenden graphischen Symbol 7.1 bis 7.5 angeordnet ist und durch welches die aktuelle Betriebsart vorteilhaft durch Leuchten oder auch durch Farbgebung anzeigbar ist.

Mit einem ersten Symbol 7.1, zusammen mit einem ersten Element 6.1, ist eine erste Betriebsart des Heizkreisreglers anzeigbar. Im weiteren ist mit einem zweiten Symbol 7.2, zusammen mit einem zweiten Element 6.2, eine zweite Betriebsart, mit einem dritten Symbol 7.3, zusammen mit einem dritten Element 6.3, eine dritte Betriebsart, mit einem vierten Symbol 7.4, zusammen mit einem vierten Element 6.4, eine vierte Betriebsart und mit einem fünften Symbol 7.5, zusammen mit einem fünften Element 6.5, eine fünfte Betriebsart des Heizkreisreglers anzeigbar. Die Elemente 6.1 bis 6.5 sind vorzugsweise Leuchtdioden.

In der ersten Betriebsart arbeitet der Heizkreisregler nach einem mindestens eine Absenk- und mindestens eine Nennphase aufweisenden Zeitprogramm, während er in der zweiten Betriebsart durchgehend auf eine reduzierte Temperatur und in der dritten Betriebsart durchgehend auf eine Nenntemperatur ausgerichtet ist. In der vierten Betriebsart ist die Heizungsanlage ausgeschaltet und in der fünften Betriebsart wird nur Brauchwasser aufbereitet.

Bei Bedarf weist der Heizkreisregler weniger oder auch andere oder mehr als die fünf Betriebsarten auf. Eine weitere Betriebsart ist beispielsweise eine Kaminfegerfunktion.

In einer weiteren vorteilhaften, nicht dargestellten Ausführung der Anzeigeeinheit 3 - beispielsweise in einer Flüssigkristallanzeige - ist das graphische Symbol 7.1 bis 7.5 der aktuellen Betriebsart direkt darstellbar.

In einer einfachen, ebenfalls nicht dargestellten Ausführung ist das Bedienungselement 2 ein Dreh- oder ein Schiebeschalter.

Die aktuelle Betriebsart des Heizkreisreglers wird durch die Anzeigeeinheit 3 einem Benutzer mitgeteilt. Ist die aktuelle Betriebsart beispielsweise die erste Betriebsart, wird durch ein erstes Betätigen des Bedienungselementes 2 der Heizkreisregler in die zweite Betriebsart geschaltet, wonach ein zweites Betätigen des Bedienungselementes 2 den Heizkreisregler in die dritte Betriebsart schaltet. Jedes weitere Betätigen des Bedienungselementes 2 schaltet den Heizkreisregler in eine nächste Betriebsart, wobei, wenn der Heizkreisregler in der letzten - hier beispielsweise der fünften - Betriebsart ist, ein nächstes Betätigen des Bedienungselementes 2 den Heizkreisregler wiederum in die erste Betriebsart setzt.

Das Zeitprogramm steuert pro Tagesablauf gemittelt eine eine bestimmte Dauer $TD_A$ aufweisende Absenkphase und weist Programmparameter auf, welche mit Vorteil durch den Benutzer einstellbar und auch veränderbar sind. Die Absenkphase beginnt mit einem Start-Zeitpunkt $T_A$, folgt einer Nennphase und wird ihrerseits durch eine weitere mit einem weiteren Start-Zeitpunkt $T_N$ beginnenden Nennphase abgeschlossen.

Während der Dauer $TD_A$ der Absenkphase ist der Sollwert des Heizkreisreglers eine reduzierte Temperatur, während der Sollwert ausserhalb der Absenkphase, also in einer Nennphase, die Nenntemperatur ist.

Der Heizkreisregler weist eine Zeitbasis auf, deren aktuelle Zeit durch eine Betätigung des weiteren Bedienungselementes 4 als ein Wert lesbar, das heisst erfassbar und speicherbar und damit als ein neuer Zeitpunkt für eine Veränderung der Programmparameter nutzbar ist.

In der ersten Betriebsart wird durch die Betätigung des weiteren Bedienungselementes 4 der Wert der aktuellen Zeit aus der Zeitbasis als ein neuer Start-Zeitpunkt $T_A$ der Absenkphase übernommen und abgespeichert, während die geltende Dauer $TD_A$ nicht verändert wird.

In der zweiten Betriebsart wird durch die Betätigung des weiteren Bedienungselementes 4 der Wert der aktuellen Zeit aus der Zeitbasis als ein neuer Start-Zeitpunkt $T_A$ übernommen und abgespeichert, während der geltende Start-Zeitpunkt $T_N$ der Nennphase gleichbleibt. In der zweiten Betriebsart bewirkt also eine Veränderung des Start-Zeitpunktes $T_A$ auch eine Veränderung der Dauer $TD_A$ der Absenkphase.

In der dritten Betriebsart wird durch die Betätigung des weiteren Bedienungselementes 4 der Wert der aktuellen Zeit aus der Zeitbasis als ein neuer Start-Zeitpunkt $T_N$ der Nennphase übernommen und abgespeichert, während der geltende Start-Zeitpunkt $T_A$ gleichbleibt, womit der Start-Zeitpunkt $T_N$ der Nennphase und die Dauer $TD_A$ durch den Benutzer verändert wird.

Die veränderten Programmparameter sind in der ersten Betriebsart, das heisst wenn der Heizkreisregler nach dem Zeitprogramm arbeitet, wirksam.

Das weitere Bedienungselement 4 ist mit Vorteil eine Drucktaste (Fig. 3), welche, um das Risiko einer Fehlbedienung gering zu halten, für eine Veränderung von Programmparametern vorteilhaft etwa drei Sekunden lang betätigt werden muss. Mittels der weiteren Anzeigeeinheit 5 wird ein Auslösen der Veränderung dem Benutzer vorteilhaft mitgeteilt. Die weitere Anzeigeeinheit 5 ist beispielsweise eine Leuchtdiode, welche durch ein zeitlich beschränktes Leuchten oder Blinken eine Betätigung und nachher das Auslösen der Veränderung anzeigt.

Die Fig. 4 zeigt ein Zustands-Ereignis-Diagramm zu einer verallgemeinerten Form des beschriebenen Verfahrens zur Veränderung von Programmparametern.

Der Heizkreisregler weist eine Anzahl n verschiedener Betriebsarten auf, welche mit dem Bedienungselement 2 wählbar sind. Im Beispiel ist die Anzahl fünf; bei einer anderen Ausführung eines Heizkreisreglers kann die Anzahl jedoch auch verschieden von fünf sein.

Mit 8.1 bis 8.n sind die verschiedenen Betriebsarten bezeichnet. Jede der n Betriebsarten entspricht genau einem Zustand im Zustands-Ereignis-Diagramm. Ein als ein gekrümmter Pfeil eingezeichnetes Ereignis $e_T$ bewirkt einen Übergang von einer Betriebsart 8.k in eine andere Betriebsart 8.j, wobei im Beispiel der Index j aus dem Index k mit Hilfe der den Rest der ganzzahligen Division k durch n berechnenden Operation rem durch $j = (k \text{ rem } n) + 1$ bestimmt ist.

Das Ereignis $e_T$ ist eine Betätigung des Bedienungselementes 2. In jeder Betriebsart 8.1 bis 8.n sind weitere Ereignisse vorsehbar, welche ihrerseits je eine eine Veränderung bewirkende Aktion auslösen.

Im Zustands-Ereignis-Diagramm ist eine Aktion durch ein Quadrat dargestellt, welches mit dem auslösenden Ereignis durch einen geraden Pfeil verbunden ist.

Im Beispiel ist für jede Betriebsart 8.1 bis 8.n mit einem gekrümmten Pfeil je ein weiteres Ereignis $e_P$ dargestellt. Abhängig von der aktuellen Betriebsart 8.i, mit dem Index i von 1 bis maximal n, löst das Ereignis $e_P$ eine Aktion 9.i aus. Jede der Aktionen 9.1 bis 9.n kann eine unterschiedliche Veränderung von Programmparametern bewirken. Bei n Betriebsarten und einem Ereignis $e_P$ sind somit maximal n verschiedene Veränderungen möglich.

Im beschriebenen Beispiel ist das Ereignis $e_P$ die Betätigung des weiteren Bedienungselementes 4 und die Aktion 9.1 umfasst das Übernehmen des neuen Start-Zeitpunktes $T_A$ aus der Zeitbasis unter Beibehaltung der geltenden Dauer $TD_A$.

Bei Bedarf sind zusätzliche, von den Betriebsarten 8.1 bis 8.n abhängige Ereignisse einführbar. Die zusätzlichen Ereignisse sind durch zusätzliche, am Gehäuseteil 1 angeordnete, jedoch in der Zeichnung nicht dargestellte Bedienungselemente auslösbar. Mit den zusätzlichen Bedienungselementen sind weitere Programmparameter, beispielsweise Sollwerte von Temperaturen, einlesbar, das heisst neue Werte für die Programmparameter können erfasst und abgespeichert werden.

Dadurch, dass die bei einem Heizkreisregler vorhandenen und über ein Bedienungselement 2 wählbaren Betriebsarten 8.1 bis 8.n bei einem einzigen Ereignis $e_P$ eine aktuell auszulösende Aktion 9.i der möglichen Aktion 9.1 bis 9.n bestimmen, ergibt sich ein einfaches und ausbaufähiges Verfahren zur Veränderung von mindestens zwei Programmparametern. Für die Einrichtung zur Durchführung des Verfahrens muss der mechanische Aufbau des Heizkreisreglers nur geringfügig erweitert werden. Ein bestehendes Bedienungskonzept für den Benutzer des Heizkreisreglers bleibt grundsätzlich erhalten; es wird lediglich ergänzt.

**Patentansprüche**

1. Verfahren zur Veränderung von Programmparametern eines mehrere Betriebsarten aufweisenden Heizkreisreglers für eine Heizungsanlage mit einem Bedienungselement (2) zur Wahl einer von mehreren möglichen Betriebsarten (8.1 bis 8.5) und einer Anzeigeeinheit (3) zur Darstellung der geltenden Betriebsart (8.1 bis 8.5), dadurch gekennzeichnet, dass jede gewünschte Veränderung genau je einer der Betriebsarten (8.1 bis 8.5) zugeordnet wird, dass für eine Veränderung mittels des Bedienungselementes (2) diejenige Betriebsart (8.1 bis 8.5) gewählt wird, welcher die Veränderung zugeordnet ist, und dass, indem mindestens ein weiteres Bedienungselement (4) betätigt wird, mindestens ein Parameterwert eingelesen und die Veränderung ausgeführt wird.

2. Verfahren nach Anspruch 1, dadurch gekennzeichnet, dass eine erste Veränderung den Zeitpunkt ($T_A$) des Beginns einer Absenkphase mit einer vorbestimmten Dauer ($TD_A$) neu setzt, dass eine zweite Veränderung den Zeitpunkt ($T_A$) des Beginns einer Absenkphase mit einem vorbestimmten Ende ($T_N$) der Absenkphase neu setzt und dass eine dritte Veränderung den Zeitpunkt ($T_N$) des Beginns einer Nennphase neu setzt.

3. Verfahren nach Anspruch 2, dadurch gekennzeichnet, dass der neue Zeitpunkt ($T_A$; $T_N$) für eine der gewählten Betriebsart (8.1 bis 8.5) zugeordnete Veränderung aus einer Zeitbasis des Heizkreisreglers gelesen wird und dass der neue Zeitpunkt ($T_A$; $T_N$) dann aus der Zeitbasis übernommen und abgespeichert wird, wenn das weitere Bedienungselement (4) betätigt wird.

4. Einrichtung zur Veränderung von Programmparametern eines mehrere Betriebsarten (8.1 bis 8.5) aufweisenden Heizkreisreglers für eine Heizungsanlage mit einem Bedienungselement (2) zur Wahl einer Betriebsart (8.1 bis 8.5) und einer Anzeigeeinheit (3) zur Darstellung der geltenden Betriebsart (8.1 bis 8.5), dadurch gekennzeichnet, dass das Bedienungselement (2) eine Drucktaste ist, durch deren Betätigung die Betriebsart (8.1 bis 8.5) des Heizkreisreglers in einer vorbestimmten Reihenfolge endlos weiterschaltbar und dadurch wählbar ist, und dass ein weiteres Bedienungselement (4) eine weitere Drucktaste ist, mit welcher durch eine Betätigung der Zeitpunkt der Betätigung aus einer Zeitbasis des Heizkreisreglers als ein neuer Zeitpunkt ($T_A$; $T_N$) für eine der geltenden Betriebsart (8.1 bis 8.5) zugeordneten Veränderung erfassbar ist.

5. Einrichtung nach Anspruch 4, dadurch gekennzeichnet, dass die Anzeigeeinheit (3) für jede Betriebsart (8.1 bis 8.5) je eine Leuchtdiode aufweist, welche neben einem die Betriebsart (8.1 bis 8.5) darstellenden graphischen Symbol (7.1 bis 7.5) angeordnet ist.

**Fig. 1**

**Fig. 2**

**Fig. 3**

**Fig. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X<br>A | EP-A-0 332 957 (TEM AG)<br>* Spalte 3, Zeile 56 - Spalte 14, Zeile 2; Abbildungen 1-17 *<br>--- | 1,4,5<br>2,3 | G05D23/19 |
| X<br>A | EP-A-0 503 265 (JOH.VAILLANT GMBH)<br>* Spalte 3, Zeile 4 - Spalte 8, Zeile 7; Abbildungen 1-5 *<br>--- | 1,4<br>2,3,5 | |
| A | EP-A-0 156 716 (CEPEM)<br>* Seite 3, Zeile 26 - Seite 7, Zeile 7; Abbildung 1 *<br>--- | 1-5 | |
| A | DE-U-90 17 816 (CENTRA-BÜRKLE GMBH)<br>* Seite 3, Zeile 10 - Seite 10, Zeile 23; Abbildungen 1-3 *<br>--- | 1-5 | |
| A | EP-A-0 339 373 (SIEMENS)<br>* Spalte 3, Zeile 27 - Spalte 5, Zeile 56; Abbildungen 1-6 *<br>--- | 1-5 | |
| A | DE-A-34 38 196 (BUDERUS AG)<br>* Seite 3, Zeile 5 - Seite 5, Zeile 10; Abbildung 1 *<br>----- | 1,4 | **RECHERCHIERTE SACHGEBIETE (Int.Cl.5)**<br><br>G05D |

Der vorliegende Recherchenbericht wurde für alle Patentansprüche erstellt

| Recherchenort | Abschlußdatum der Recherche | Prüfer |
|---|---|---|
| DEN HAAG | 20. Januar 1994 | Calarasanu, P |